# EUROPÄISCHE PATENTSCHRIFT

(11) **EP 0 977 678 B1**
(45) Veröffentlichungstag und Bekanntmachung des Hinweises auf die Patenterteilung: **09.07.2003**
(21) Anmeldenummer: 98919207.5
(22) Anmeldetag: 02.04.1998
(51) Int. Cl.: B60R 16/02

(54) **ANALYSEVORRICHTUNG FÜR STEUERVORRICHTUNGEN**
ANALYSIS DEVICE FOR CONTROL DEVICES
DISPOSITIF D'ANALYSE POUR DISPOSITIFS DE COMMANDE

(30) Priorität: 24.04.1997 DE 19717190
(43) Veröffentlichungstag der Anmeldung: 09.02.2000
(73) Patentinhaber: Voith Turbo GmbH & Co. KG, 89522 Heidenheim (DE)
(72) Erfinder: EHLEITER, Joachim, D-89520 Heidenheim (DE)
(74) Vertreter: Dr. Weitzel & Partner
(86) Internationale Anmeldenummer: EP9801909
(87) Internationale Veröffentlichungsnummer: WO98047743

(56) Entgegenhaltungen:
- EP-A- 0 060 326
- DE-A- 3 624 456
- DE-A- 3 810 241
- DE-A- 4 233 268
- DE-C- 4 315 494

## Beschreibung

Die Erfindung betrifft ein System zur Fehlerdiagnose von peripheren Bausteinen und/oder Steuervorrichtungen, die mit einem im Kraftfahrzeug eingebauten Steuergerät, insbesondere dem Getriebesteuergerät, kommunizieren. Das Steuergerät weist Eingänge und/oder Ausgänge auf. Neben der Vorrichtung stellt die Erfindung auch ein Verfahren zur Fehlerdiagnose von Steuereinrichtung und/oder peripheren Bausteinen zur Verfügung, die an ein Steuergerät angeschlossen sind, zur Verfügung.

Steuergeräte und Steuereinrichtungen finden heute vermehrt in Kraftfahrzeugen Verwendung, hier sei beispielsweise das Motorsteuergerät oder das Getriebesteuergerät genannt. Um ein und dasselbe Getriebesteuergerät in Fahrzeugen mit unterschiedlichen Getriebetypen verwenden zu können, ist vorgesehen einen Teil oder alle Ein- und/oder Ausgänge der Steuereinrichtung frei konfigurierbar auszulegen. Im Steuergerät wird ein Datensatz beispielsweise in einem Speicherbereich abgelegt, dem die Zuordnungen der einzelnen Ein- und/oder Ausgangsfunktionen zu den Ein- und/oder Ausgängen der Steuervorrichtung zu entnehmen sind. Dies bedeutet, daß das Steuergerät anhand dieses Datensatzes erkennen kann, wie die ankommenden Eingangssignale zu interpretieren sind und an welchen PINs die Ausgangssignale zu generieren sind.

Bei Defekten von peripheren Bausteinen oder aber des Steuergerätes selbst, war es gemäß dem Stand der Technik notwendig, sämtliche Eingänge bzw. Ausgänge einzeln zu vermessen und entsprechend den zugrundeliegenden Eingangs- bzw. Ausgangsfunktionen das Tauschgerät zu konfiguieren. Dieses bedeutet einen erheblichen Zeichnungserstellungs- und Verwaltungsaufwand.

Ein weiteres Problem war das folgende:

Periphere Bausteine oder auch Steuervorrichtungen, wie beispielsweise das Motorsteuergerät werden oftmals nach Kundenwunsch mit beliebigen Ein - und/oder Ausgangsfunktionen belegt. Dabei kann die Zahl der möglichen Ein- und/oder Ausgangsfunktionen die Zahl der physikalisch vorhandenen Ein - und/oder Ausgänge des Steuergerätes sogar übersteigen. Die Schwierigkeit besteht insbesondere bei der Diagnose solcher frei konfigurierten Systemen beispielsweise durch einen Servicefachmann vor Ort darin herauszufinden, welche Funktionen überhaupt Verwendung finden.

Aus der DE 42 40 447 ist ein Verfahren zur elektronischen Kennung einer fahrzeugspezifischen Kombination von optionalen, sekundären elektronischen Steuergeräten bekanntgeworden, die über eine gemeinsame Signalleitung mit einem primären Steuergerät verbindbar sind.

Die DE 39 34 974 zeigte eine Vorrichtung zur Funktionskontrolle mehrerer Steuergeräte in einem Kraftfahrzeug mittels einer Kontrollanzeige, wobei in jedem Steuergerät Mittel zur Erzeugung eines Kontrollsignales als Funktionsmeldung vorgesehen sind, und wobei aufgrund dieses Kontrollsignales Informationen zur Ansteuerung der Kontrollanzeige ausgebbar sind.

In der gattungsbildenden DE-A-38 10 241 ist eine Vorrichtung zum Speichern von Fehlermeldungen beschrieben, die einen fahrzeugseitigen Anschluß, der mit mehreren elektronischen Kontrolleinheiten an dem Fahrzeug zu verbinden ist, einen testerseitigen Anschluß, der mit einem Fehlerdiagnose-Multifunktionstester oder einer Anzeigeeinrichtung zu verbinden ist, Signalumwandlungsmittel, die Signale von dem fahrzeugseitigen Anschluß in Ausgangssignale an den testerseitigen Anschluß umwandeln, eine Speichereinheit zum Speichern der von den Signalwandlungsmittlen gewandelten Ausgangssignale und einen Mikrocomputer aufweist, der die in den Eingangssignalen enthaltenen Informationen verarbeitet und die einzelnen Elemente steuert.

Aufgabe der Erfindung ist es ein Analysesystem zur Analyse von peripheren Bausteinen oder Steuervorrichtungen, die an ein Steuergerät, beispielsweise ein Getriebesteuergerät, angeschlossen sind, zur Verfügung zu stellen, mit dem die oben geschilderten Nachteile des Standes der Technik überwunden werden können. Insbesondere soll mit der Erfindung ein Verfahren und eine Vorrichtung zur Verfügung gestellt werden, mit der die Diagnose von an ein Steuergerät angeschlossenen Steuervorrichtungen oder peripheren Bausteinen schnell und kostengünstig erfolgen kann. Auch soll eine Diagnose von einfachen Bauteilen, wie Sensoren und Schalter, möglich sein.

Erfindungsgemäß wird die Aufgabe durch das System gemäß Anspruch 1 und das Verfahren gemäß Anspruch 7 gelöst.

Das erfindungsgemäße Fehlerdiagnosesystem verfügt über eine Ausleseeinrichtung, um die Belegung der Zuordnung der Ein- und/oder Ausgabefunktionen zu den Ein- und/oder Ausgängen auszulesen. Die derart ermittelten Belegungen werden auf der Ausgabeeinrichtung der Analysevorrichtung ausgegeben, wobei das Ausgabegerät bevorzugt eine Recheneinheit mit herkömmlichem Bildschirm ist, oder aber auch eine Ausgabe über einen Drucker. Des weiteren weist die Fehlerdiagnosevorrichtung Mittel zur Erstellung von Stromlaufplänen für die Ein- und/oder Ausgänge der an das Steuergerät anschließbaren Steuervorrichtungen und/oder peripheren Bausteine.

In einer Weiterbildung der Erfindung ist vorgesehen, daß das Steuergerät mindestens einen frei belegbaren Ein- und/oder Ausgang umfaßt.

Als periphere Bausteine werden in dieser Anmeldung sämtliche Bauelemente verstanden, die mit dem Steuergerät elektronisch kommunizieren, beispielsweise Relais, Lampen, Schalter, Sensoren, Magnetventile. Als Steuervorrichtungen, mit denen das Steuergerät kommuniziert, wird beispielhaft auf das Motorsteuergerät, das ABS- oder ASR-Steuergerät verwiesen.

Mit Vorteil kann das Auslesen des in dem Steuergerät abgelegten Datensatzes über eine serielle Schnittstelle, beispielsweise eine herkömmliche RS232-Schnittstelle erfolgen.

Idealerweise umfassen die Mittel zum Erstellen von Stromlaufplänen mindestens einen Speicherbereich, in dem mindestens die Grundkonfigurationen aller möglichen Ein- und Ausgangsfunktionen abgelegt sind.

Besonders vorteilhaft ist es, wenn der für eine bestimmte Eingangs- und/oder Ausgangsbelegung erforderliche Stromlaufplan automatisch mittels eines Rechenalgorithmuses erstellt wird.

Neben der Vorrichtung stellt die Erfindung auch ein Verfahren zur Analyse von Steuereinrichtungen und/oder peripheren Bausteinen, die an ein Steuergerät angeschlossen sind, zur Verfügung, wobei das Steuergerät mindestens eine Eingangs-/Ausgangsfunktion aufweist und einen Datensatz, der die Zuordnung der Eingangs- und/oder Ausgangsfunktionen zu den jeweiligen Eingängen und/oder Ausgängen sowie Mitteln zur Ausgabe von Stromlaufplängen umfaßt. Das erfindungsgemäße Verfahren zeichnet sich dadurch aus, daß die Ausleseeinrichtung eine Anfrage betreffend eine bestimmte Ein - und/oder Ausgabefunktion an das Steuergerät übermittelt; aufgrund dieser Anfrage wird aus dem in der Steuervorrichtung hinterlegten Datensatz bzw. Konfigurationsdatei die Zuordnung ausgelesen und die PIN-Belegung sowie die aus diesen Informationen mittels eines Algorithmuses erstellen Stromlaufpläne für bestimmte anschaltbare Bauelemente auf der Ausgabeeinrichtung ausgegeben, wobei die dem PIN zugeordnete Funktion dargestellt wird. Die oben genannte Vorrichtung und das Verfahren eignen sich insbesondere für eine Verwendung zur Fehlerdiagnose von Steuergeräten in Fahrzeugen, insbesondere von Getriebesteuer eräten. Defekte der Steuereinrichtung und/oder peripherer Bausteine, die an das Steuergerät angeschlossen sind, können so leicht aufgefunden Werden, beispielsweise mit Hilfe eines tragbaren Mikrocomputers. Dies ermöglicht eine schnelle und ortsunabhängige Diagnose und Fehlerortung.

Die Erfindung soll nunmehr beispielhaft beschrieben werden.

Es zeigen:

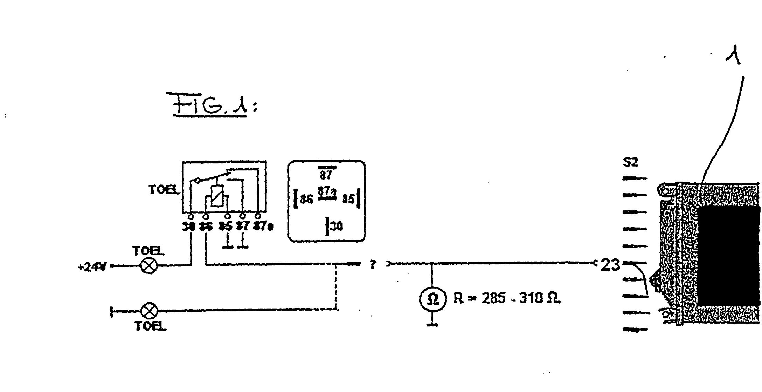

- Fig. 1: die Kombination der Grundkonfiguration bzw. des Teil des Stromlaufplan der für alle möglichen Ein - und/oder Ausgabefunktionen gleich ist, mit der ermittelten PIN-Belegung.

Das Steuergerät soll in einem ersten Ausführungsbeispiel über frei belegbare Ein - und/oder Ausgänge verfügen sowie eine feste Zuordnung von Ein- und/oder Ausgangsfunktionen zu einer Kennung dieser Ein - und/oder Ausgangsfunktionen.

Dies ist beispielhaft in Tabelle 1 dargestellt:

**Tabelle 1**

| Ein- und/oder Ausgangsfunktion | Kennung |
|---|---|
| A | 0001 |
| B | 0010 |
| C | 0011 |

Das Steuergerät umfasst eine bestimmte Anzahl von Ausgängen für Ausgangsfunktionen und eine bestimmte Anzahl von Eingängen für Eingangsfunktionen. In vorliegendem Beispiel handelt es sich um insgesamt drei Ein - bzw. Ausgänge die entsprechend belegt sind.

Im Steuergerät ist des weiteren bspw. in einem Speicherbaustein ein Datensatz bzw. Konfigurationsdatei hinterlegt, der die Zuordnung der einzelnen Ein - und/oder Ausgangsfunktionen zu den Ein - und/oder Ausgangspins des Steuergerätes umfasst. Anhand dieses Datensatzes erkennt das Steuergerät bspw. wie die ankommenden Eingangssignale zu interpretieren sind. Die Zuordnung der einzelnen Ein - und/oder Ausgangsfunktionen zeigt Tabelle 2:

**Tabelle 2**

| Nummer der Ein - und/oder Ausgangsfunktion | Pinnummer des SG | Kennung der Ein - und/oder Ausgangsfunktion |
|---|---|---|
| 1 | 17 | 0010 |
| 2 | 52 | 0011 |
| 3 | 23 | 0001 |

Soll nun ein einzelner Ausgang, ein Eingang oder auch mehrere Ein - und/oder Ausgänge diagnostiziert werden, so geschieht dies mit einer Ausleseeinrichtung bspw. wie folgt:

In der Ausleseeinrichtung sind alle theoretisch möglichen Belegungen der Ein und/oder Ausgänge bspw. in einem Speicherbereich abgelegt. Die Ausleseeinrichtung sendet nun Anfragen an das Steuergerät, bspw. die Kennung 0001 für die Ein - und/oder Ausgangsfunktion A. Im Steuergerät wird nun der bspw. in einem Speicherbaustein abgelegte Datensatz daraufhin abgefragt, welcher Ein - und/oder Ausgangspin mit der Ein- und/oder Ausgangsfunktion, die die Kennung 0001 trägt, belegt ist.

In vorliegendem Beispiel wäre dies gemäß Tabelle 2 Pinnummer 23. Dieses Ergebnis wird an die Ausleseeinheit übermittelt und von dieser auf einer Ausgabeeinheit bspw. einem Bildschirm eines Mikrocomputers ausgegeben.

Es ist möglich nur einzelne PIN-Belegungen auszulesen oder aber sämtliche PIN-Belegungen. In einer Fortbildung der Erfindung kann vorgesehen sein, daß das System über Mittel zum Erstellen von Stromlaufplänen verfügt, bspw. einen Speicherbereich und eine Rechnereinrichtung, die beispielsweise in die Ausleseeinrichtung integriert sein kann.
In dem Speicherbereich kann in dieser Ausführungsform die Grundkonfiguration, d.h. der Teil des Stromlaufplanes, der für alle mögliche Ein - und/oder Ausgangsfunktionen immer gleich ist, hinterlegt sein.

Aus der Grundkonfiguration der Ein - und/oder Ausgangsfunktionen und der aus dem Steuergerät ausgelesenen Zuordnung der Ein - und/oder Ausgangsfunktionen kombiniert die Rechnereinrichtung der Ausleseeinrichtung die Gesamtkonfiguration der Ein - und/oder Ausgangsfunktionen und bringt sie auf der Ausgabeeinheit zur Darstellung.

In Fig. 1 ist das Anzeigeergebnis einer derartigen Ermittlung dargestellt. Es wird in Fig. 1 der Stromlaufplan gezeigt, wobei PIN 23 des Steuergerätes 1 mit der Ausgangsfunktion A und der Kennung 0001, wie in vorigem Beispiel beschrieben, belegt ist, was mit der erfindungsgemäßen Anordnung zur Anzeige gebracht wird.

Soll nun ein peripherer Baustein oder eine Steuervorrichtung diagnostiziert werden, so muß vom Anwender lediglich ein Diagnosebefehl für die bestimmte Ausgangsfunktion gegeben werden. Das Diagnose- bzw. Analysesystem alloziert dann den Diagnosebefehl automatisch richtig.

Die am entsprechenden Eingang erwartete Eingangsfunktion bzw. Signalform wird sodann geprüft.

Der Ablauf soll nachfolgend beispielhaft beschrieben werden:

Beispielsweise liegt das erwartete Signal des Motorsteuergerätes auf PIN 23 und ist ein pulsweiten-moduliertes Signal mit einer bestimmten Frequenz, die die Fahrpedalstellung repräsentiert.

Stellt sich bei der Signalprüfung am Eingangspin 23 des Getriebesteuergerätes für die Motorsteuerung heraus, daß das erwartete Signal nicht mit dem tatsächlich anliegenden Signal übereinstimmt, so wird auf der Ausgabeeinrichtung die Fehlermeldung ausgegeben, daß die Verbindung zum Motorsteuergerät nicht korrekt arbeitet.

Analog, wie oben beschrieben, kann für die Analyse bzw. Diagnose der anderen am Steuergerät angeschlossenen peripheren Bausteine bzw. Steuervorrichtungen verfahren werden.

Im nachfolgendem Beispiel werden die Vorteile der erfindungsgemäßen Analysevorrichtung nochmals verdeutlicht. So soll ein Steuergerät bspw. über drei konfigurierbare Eingänge (PIN 1, PIN 2, PIN 3) verfügen und des weiteren über Eingangsfunktionen A und B. Im Datensatz des Steuergerätes ist hinterlegt, daß die Funktion A an Eingang 2 (PIN 2) und die Funktion B an Eingang 1 (PIN 1) eingelesen werden soll, Der Eingang 3 (PIN 3) soll funktionslos bleiben.

Es ergeben sich aus der Anzahl der PIN's und der den Eingängen zugeordneten zwei Funktionen A und B sechs mögliche Konfigurationen für dieses Steuergerät. Die möglichen Konfigurationen sind in nachfolgender Tabelle aufgeführt.

**Tabelle 3**

| | Pin 1 | Pin 2 | Pin 3 |
|---|---|---|---|
| Konfiguration 1 A1 / B2 | A | B | |
| Konfiguration 2 A1 / B3 | A | | B |
| Konfiguration 3 A2 / B1 | B | A | |
| Konfiguration 4 A2 / B3 | | A | B |
| Konfiguration 5 A3 / B1 | B | | A |
| Konfiguration 6 A3 / B2 | | B | A |

Wie der Tabelle zu entnehmen ist, sind somit auch sechs Konfigurationen für dieses Steuergerät theoretisch möglich. Mit Hilfe der erfindungsgemäßen Vorrichtung bzw. des erfindungsgemäßen Verfahrens ist es nunmehr möglich, sofort anzuzeigen, daß das Steuergerät über die Konfiguration 3 mit der Belegung A2 / B1 verfügt.

Sodann kann, wie zuvor beschrieben, eine rasche Diagnose bzw. Funktionsprüfung durchgeführt werden.

## Patentansprüche

1. System zur Fehlerdiagnose von peripheren Bausteinen und/oder Steuervorrichtungen, die an ein Steuergerät (1), das in ein Kraftfahrzeug eingebaut ist, angeschlossen sind, wobei das Steuergerät (1) Ein- und/oder Ausgänge (PIN1, PIN2, PIN3) für mindestens eine Eingangs- und/oder Ausgangsfunktion aufweist und einen Datensatz, der die Zuordnung der Ein- und/oder Ausgangsfunktionen zu den jeweiligen Ein- und/oder Ausgängen (PIN1, PIN2, PIN3) umfaßt und das System eine Ein-/Ausgabeeinrichtung umfaßt, um die Zuordnung der Ein- und/oder Ausgabefunktionen zu den Ein- und/oder Ausgängen (PIN1, PIN2, PIN3) aus dem Datensatz auszulesen und die den einzelnen Ein- und/oder Ausgängen (PIN1, PIN2, PIN3) zugeordneten Funktionen auf der Ausgabeeinrichtung ausgeben zu können, **dadurch gekennzeichnet, daß**
das System des weiteren Mittel zum Erstellen von Stromlaufplänen für die an die Ein- und/oder Ausgänge des Steuergerätes (1) angeschlossenen Steuervorrichtungen und/oder peripheren Bauelemente umfaßt.

2. System gemäß Anspruch 1, **dadurch gekennzeichnet, daß** die Ein-/Ausgabeeinrichtung ein externer Rechner ist.

3. System gemäß Anspruch 1 oder 2, **dadurch gekennzeichnet, daß** das Steuergerät mindestens einen frei konfigurierbaren Ein- und/oder Ausgang umfasst.

4. System nach einem der Ansprüche 1 bis 3, **dadurch gekennzeichnet, daß**
die Ausleseeinrichtung eine serielle Schnittstelle umfaßt

5. System nach einem der Ansprüche 1 bis 4, **dadurch gekennzeichnet, daß**
die Mittel zum Erstellen von Stromlaufplänen mindestens einen Speicherbereich umfassen, in dem mindestens eine Grundkonfiguration abgelegt ist.

6. System nach Anspruch 5, **dadurch gekennzeichnet, daß**
die Mittel zum Erstellen von Stromlaufplänen eine Rechnereinrichtung umfassen, mit deren Hilfe die individuellen Stromlaufpläne von bestimmten Ein- und/oder Ausgängen erstellt werden.

7. Verfahren zur Fehlerdiagnose und/oder peripheren Bausteinen, die an ein Steuergerät, das in ein Kraftfahrzeug eingebaut ist, angeschlossen sind, mit einem Analysesystem gemäß einem der Ansprüche 1 bis 6, umfassend die folgenden Schritte:
eine Ausleseeinrichtung übermittelt eine Anfrage betreffend eine bestimmte Ein- und/oder Ausgabefunktion an das Steuergerät (1);
aufgrund dieser Anfrage werden aus dem Datensatz der Steuervorrichtung die Zuordnung bzw. Konfigurationsdaten ausgelesen und
die PIN-Belegung (PIN1, PIN2, PIN3) und der Stromlaufplan werden auf einer Ausgabeeinrichtung ausgegeben, wobei die dem PIN zugeordnete Funktion dargestellt wird,
**dadurch gekennzeichnet, daß**
das System Stromlaufpläne für die an die Ein- und/oder Ausgänge des Steuergerätes (1) angeschlossenen Steuervorrichtungen und/oder peripheren Bauelemente erstellt.

8. Verfahren nach Anspruch 7, **dadurch gekennzeichnet, daß** durch Eingabe eines Diagnosebefehls für die zu analysierende Funktion in die Ausgabeeinrichtung durch einen Bediener der Diagnosebefehl automatisch dem entsprechenden Ausgang und/oder Eingang des Steuergerätes zugeordnet wird.

9. Verwendung eines Fehlerdiagnosesystems gemäß einem der Ansprüche 1 bis 6,
zur Fehlerdiagnose von Steuereinrichtungen und/oder peripheren Bausteinen, die an ein Steuergerät anschlossen sind, in einem Kraftfahrzeug.

## Claims

1. A system for fault diagnosis of peripheral modules and/or control apparatuses which are connected to a control device (1) which is built into a motor vehicle, with the control device (1) comprising inputs and/or outputs (PIN1, PIN2, PIN3) for at least one input and/or output function and a data record which comprises the allocation of the input and/or output functions to the respective inputs and/or outputs (PIN1, PIN2, PIN3) and the system comprises an input-output device in order to read out the allocation of the input and output functions to the inputs and/or outputs (PIN1, PIN2, PIN3) from the data record and is capable of outputting on the output device the functions which are allocated to the individual inputs and/or outputs (PIN1, PIN2, PIN3), **characterized in that** the system further comprises means for producing schematic diagrams for the control apparatuses and/or peripheral modules which are connected to the inputs and/or outputs of the control device (1).

2. A system according to claim 1, **characterized in that** the input-output device is an external computer.

3. A system according to claim 1 or 2, **characterized in that** the control device comprises at least one free configurable input and/or output.

4. A system as claimed in one of the claims 1 to 3, **characterized in that** the read-out device comprises a serial interface.

5. A system as claimed in one of the claims 1 to 4, **characterized in that** the means for producing schematic diagrams comprise at least a memory area to which at least one basic configuration is saved.

6. A system as claimed in claim 5, **characterized in that** the means for producing schematic diagrams comprise a computer device, with the help of which the individual schematic diagrams of specific inputs and outputs are produced.

7. A method for fault diagnosis and/or peripheral components which are connected to a control device built into a motor vehicle, comprising an analytic system as claimed in one of the claims 1 to 6, comprising the following steps
a read-out device sends a query concerning a specific input and/or output function to the control device (1);
on the basis of this query the allocation or configuration data are read out of the data record of the control apparatus, and
the PIN assignment (PIN1, PIN2, PIN3) and the schematic diagram are output on an output device, with the function allocated to the PIN being represented, **characterized in that** the system produces schematic diagrams for the control apparatuses and/or peripheral modules which are connected to the inputs and/or outputs of the control device (1).

8. A method as claimed in claim 7, **characterized in that** by entering a diagnostic command into the output device by a user for the function to be analyzed, the diagnostic command is automatically allocated to the respective output and/or input of the control device.

9. The use of a fault diagnosing system as claimed in one of the claims 1 to 6, for diagnosing faults in control devices and/or peripheral modules connected to a control device in a motor vehicle.

## Revendications

1. Système destiné à diagnostiquer les erreurs de composants périphériques et/ou de dispositifs de commande raccordés à un appareil de commande (1) installé dans un véhicule automobile, l'appareil de commande (1) comportant des entrées et/ou des sorties (PIN1, PIN2, PINS) pour au moins une fonction d'entrée et/ou de sortie et un ensemble de données comprenant l'affectation des fonctions d'entrée et/ou de sortie aux entrées et/ou sorties (PIN1, PIN2, PIN3) correspondantes et le système comprenant un organe d'entrée-sortie permettant d'extraire de l'ensemble de données l'affectation des fonctions d'entrée et/ou de sortie aux entrées et/ou sorties (PIN1, PIN2, PIN3) et de foumir en sortie, sur l'organe de sortie, les fonctions affectées aux différentes entrées et/ou sorties (PIN1, PIN2, PIN3), **caractérisé en ce que**
le système comprend par ailleurs des moyens pour élaborer des schémas de circuit pour les dispositifs de commande et/ou les composants périphériques raccordés aux entrées et/ou aux sorties de l'appareil de commande (1).

2. Système selon la revendication 1, **caractérisé en ce que** l'organe d'entrée-sortie est un calculateur externe.

3. Système selon la revendication 1 ou 2, **caractérisé en ce que** l'appareil de commande comprend au moins une entrée et/ou sortie qui soit configurable à volonté.

4. Système selon l'une quelconque des revendications 1 à 3, **caractérisé en ce que** l'organe d'extraction comprend une interface série.

5. Système selon l'une quelconque des revendications 1 à 4, **caractérisé en ce que** les moyens pour élaborer des schémas de circuit comprennent au moins une zone mémoire dans laquelle est stockée au moins une configuration de base.

6. Système selon la revendication 5, **caractérisé en ce que** les moyens pour élaborer des schémas de circuit comprennent un organe calculateur à l'aide duquel sont élaborés les schémas de circuit individuels de certaines entrées et/ou sorties.

7. Procédé pour diagnostiquer les erreurs de composants périphériques et/ou de dispositifs de commande raccordés à un appareil de commande (1) installé dans un véhicule automobile, avec un système d'analyse selon l'une quelconque des revendications 1 à 6, comprenant les étapes suivantes :
un organe d'extraction transmet une requête concernant une certaine fonction d'entrée et/ou de sortie à l'appareil de commande (1) ;
suite à cette requête, l'affectation, voire les données de configuration, sont extraites de l'ensemble de données du dispositif de commande et
l'affectation des PIN (PIN1, PIN2, PINS) et le schéma de circuit sont fournis en sortie sur un organe de sortie, la fonction assignée au PIN étant représentée,
**caractérisé en ce que**
le système élabore des schémas de circuit pour les dispositifs de commande et/ou les composants périphériques raccordés aux entrées et/ou aux sorties de l'appareil de commande (1).

8. Procédé selon la revendication 7, **caractérisé en ce qu'**un opérateur saisit une instruction de diagnostic de la fonction à analyser à l'organe de sortie et que de ce fait l'instruction de diagnostic est automatiquement assignée à la sortie et/ou à l'entrée correspondante de l'appareil de commande.

9. Utilisation d'un système de diagnostic d'erreurs selon l'une quelconque des revendications 1 à 6,
pour diagnostiquer les erreurs d'organes de commande et/ou de composants périphériques raccordés à un appareil de commande dans un véhicule automobile.
